# EUROPEAN PATENT APPLICATION

(11) **EP 2 728 180 A1**
(43) Date of publication of application: **07.05.2014**
(21) Application number: 12191022.8
(22) Date of filing: 02.11.2012
(51) Int. Cl.: F03G 3/00, F03G 3/06, F03G 3/08

(54) **Method and apparatus for energy extraction of a gravitational field**

(71) Applicant: Cortell Flasche, Jordi, 08758 Cervello (ES)
(72) Inventor: Cortell Flasche, Jordi, 08758 Cervello (ES)

(57) **Abstract**

A method and apparatus to extract energy from a gravitational field, by means of transmission of mechanical torque.

Weights of equal mass situated at opposite sides of a balanced structure, transmit torque to the axis of the structure, by means of levers, gears and axis.

Fig. 1 shows one example out of of many different possible setups, where the weights (4) mounted at opposite ends of the balanced structure (3), transmit their torque, caused by the gravitational pull, through a gear system (5) and (9), to the stationary axis (1) and it's gear system (7).

Gear (8) is attached to the rotating structure, as means to trasmit the rotational energy of structure (3), to external devices such as pumps, electrical generators, etc.

## Description

### Background of the invention

01 This invention relates to a method and a device that convert the downward pull of a gravitational field into rotary motion for a period of angular degrees, for the purpose of extracting energy.

02 The device consists of one balanced beam structure, rotating freely in it's centre around a horizontal axis at a right angle, that is locked and supported.

03 Weights on levers are mounted at both ends of the beam.

04 The weights are linked through a mechanism at right angle with the axis, and transmit their torque that is caused by the force of the gravitational field, to said fixed axis.

05 This transmission at right angle causes the beam to rotate for approximately 90 degrees every half turn, which makes 180 degrees every turn.

06 The motion of the rotor beam can be transmitted to extract useful energy by means of electrical generators, pumps, mechanical devices, etc.

07 The device can be improved with the addition of another beam, 90 degrees to the first one, rotating on the same axis. This would complete a full revolution.

08 Furthermore, several devices can be connected in parallel and at different angles to improve power output.

09 Following drawings will serve as an example to describe the invention, where:

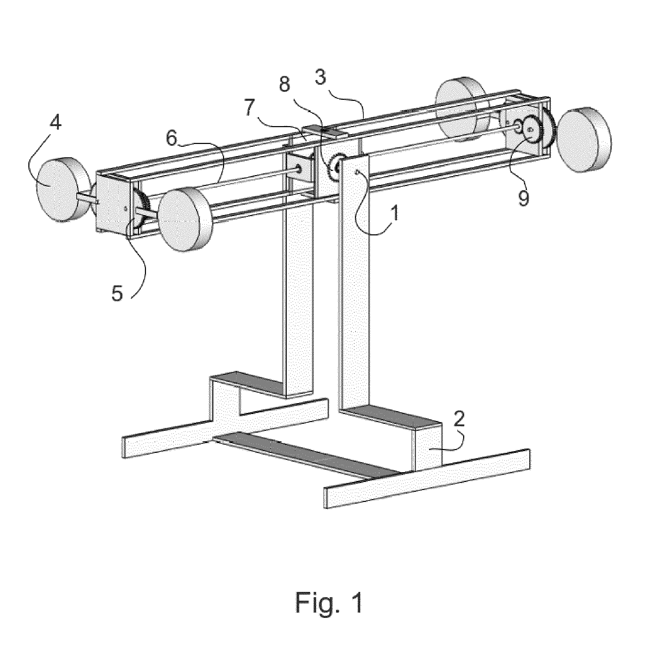

Fig. 1 shows one structure 1 embodying the present invention, in one of it's possible designs.

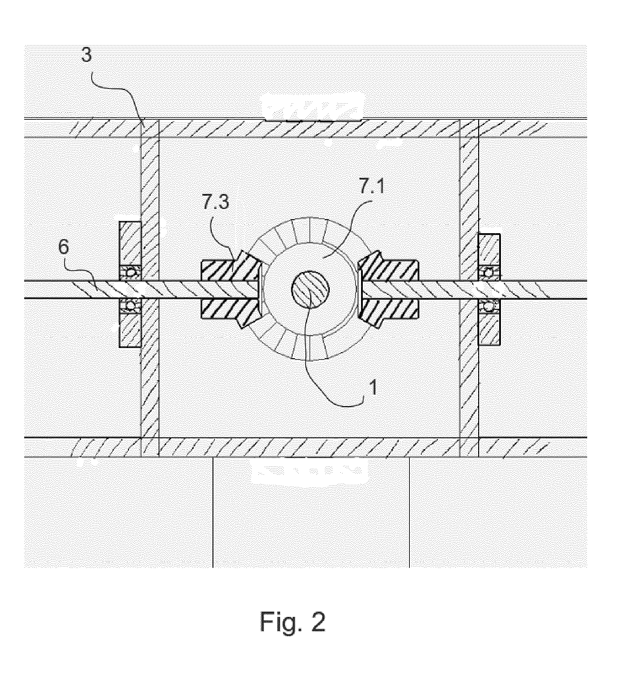

Fig. 2 shows an example of beveled gears in system 7.

10 This example has one drawback: although energy can be extracted during two periods of 90 degrees, summing 180, the other two 90 degree periods are stopped due to a lever effect of the weights (4) towards the axis (1) There is at least one way to overcome this limitiation, for example by detaching the weights and reattaching them at another point, but it will be described in another patent claim.
Therefore, I continue with the description of the working principle.

11 Shown here is one variant with two pairs of synchronized weights, but there are several other possible variations, with only weight on each side, or two pairs, etc.

12 The method consists on applying the torque at right angles to the axis, similarly to Lenz's law in electrical fields.

### Detailed Description of the Invention

Fig. 1:
   Fixed axis 1, around which revolves a horizontal structure 3, comprising weights 4, in pairs at both ends. Each pair of weights 4 is linked through a gear system 5. A multiplicator gear 9 transmits the torque through axis 6 to the gear system 7, which comprises in this application of a set of beveled gears with a dividing ratio complimentary to the multplicating ratio of gear group 9.
   Ground support 2, to which axis 1 is securely attached against rotation. A gear 8 to which a transmission can be attached, to transmit the motion and energy of the rotating structure.
Fig. 2:
   Detail example of system 7, where bevel gear 7.3 transmits torque to bevel gear 7.1.
   Gear 7.3 receives the torque from weights 4 through axis 6.
   Gear 7.1 is fixed against rotation with axis 1.

## Claims

1. A method and apparatus to extract energy from a gravitational field, comprising of:
Weights (4) in synchronized pairs by means of gears (5), at both ends of a balanced structure (3) transmit their torque at right angles to horizontal axis (1) for a certain amount of degrees.
A gear (8) attached to the rotating structure (3) for allowing energy transmission to external devices.
A support (2) to which axis (1) is fixed together with transmission (7.1).

2. A method and apparatus to extract energy from a gravitational field as claimed in claim 1, **characterised by** the application of torque on a balanced structure.

3. A method and apparatus to extract energy from a gravitational field as claimed in claim 1 and 2, **characterised by** the transmission of torque at right angle to the stationary axis.

4. A method and apparatus to extract energy from a gravitational field as claimed in claim 1, 2 and 3, **characterised by** the rotation of weights of equal mass around the fixed axis.
